(19) Europäisches Patentamt
European Patent Office
Office européen des brevets

(11) EP 3 307 830 B1

(12) # FASCICULE DE BREVET EUROPEEN

(45) Date de publication et mention de la délivrance du brevet:
**18.03.2020 Bulletin 2020/12**

(21) Numéro de dépôt: **16734423.3**

(22) Date de dépôt: **07.06.2016**

(51) Int Cl.:
***C08L 95/00*** *(2006.01)* ***C08K 3/00*** *(2018.01)*
***C08K 3/04*** *(2006.01)* ***C08K 3/16*** *(2006.01)*
***C09D 101/00*** *(2006.01)* ***C08K 3/34*** *(2006.01)*
***C09D 171/00*** *(2006.01)* ***C09D 191/00*** *(2006.01)*
***C10C 3/14*** *(2006.01)* ***C08L 97/02*** *(2006.01)*
***B29B 9/16*** *(2006.01)* ***C09D 103/04*** *(2006.01)*
***C09D 105/04*** *(2006.01)* ***C09D 105/12*** *(2006.01)*
***C09D 189/06*** *(2006.01)* ***C09D 197/00*** *(2006.01)*
***C08L 71/02*** *(2006.01)* ***C08L 97/00*** *(2006.01)*

(86) Numéro de dépôt international:
**PCT/FR2016/051360**

(87) Numéro de publication internationale:
**WO 2016/198782 (15.12.2016 Gazette 2016/50)**

(54) **BITUME SOLIDE A TEMPERATURE AMBIANTE**

BEI RAUMTEMPERATUR FESTES BITUMEN

BITUMEN THAT IS SOLID AT AMBIENT TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **09.06.2015 FR 1555261**

(43) Date de publication de la demande:
**18.04.2018 Bulletin 2018/16**

(73) Titulaire: **Total Marketing Services**
**92800 Puteaux (FR)**

(72) Inventeurs:
- **VINCENT, Régis**
  **69520 Grigny (FR)**
- **MOUAZEN, Mouhamad**
  **69008 Lyon (FR)**
- **LAPALU, Laurence**
  **69100 Villeurbanne (FR)**

(74) Mandataire: **Corizzi, Valérie et al**
**PACT-IP**
**37, rue Royale**
**92210 Saint-Cloud (FR)**

(56) Documents cités:
**US-A1- 2011 233 105**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### Domaine technique

La présente invention a pour objet un bitume routier sous forme divisée, solide à température ambiante. La présente invention concerne également un procédé de préparation de bitume routier à température ambiante ainsi que son utilisation comme liant routier, notamment pour la fabrication d'enrobés.

La présente invention concerne également un procédé de fabrication d'enrobés à partir de bitume solide selon l'invention ainsi qu'un procédé de transport et/ou de stockage de bitume routier solide à température ambiante selon l'invention.

### Etat de l'art

La grande majorité du bitume est utilisée en construction, principalement pour la fabrication de chaussées routières ou dans l'industrie, par exemple pour des applications de toiture. Il se présente généralement sous la forme d'un matériau noir fortement visqueux, voire solide à température ambiante, qui se fluidifie en chauffant.

De manière générale, le bitume est stocké et transporté à chaud, en vrac, dans des camions-citernes ou par bateaux à des températures élevées de l'ordre de 120°C à 160°C. Or, le stockage et le transport du bitume à chaud présente certains inconvénients. D'une part, le transport du bitume à chaud sous forme liquide est considéré comme dangereux et il est très encadré d'un point de vue règlementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume en conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement du bitume à température ambiante dans des fûts métalliques. Ce moyen est de plus en plus contestable d'un point de vue environnemental car le bitume stocké dans les fûts doit être réchauffé avant son utilisation comme liant routier. Or, cette opération est difficile à mettre en œuvre pour ce type de conditionnement et les fûts constituent un déchet après utilisation. D'autre part, le stockage du bitume à température ambiante dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

A titre d'autres exemples de conditionnement, on peut citer les bitumes sous forme de granules transportés et/ou stockés dans des sacs, souvent utilisés dans des endroits où la température ambiante est élevée. Ces granules présentent l'avantage d'être facilement manipulables. US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

La demande WO2009/153324 décrit des granules de bitume enrobées par un composé anti-agglomérant polymérique, en particulier du polyéthylène. L'inconvénient de cet enrobage est qu'il modifie les propriétés du bitume lors de son application routière.

La demande US 2011/0233105 décrit de l'asphalte solide à température ambiante sous forme de granules comprenant un cœur et une couche de revêtement. Le cœur est constitué de matériaux recyclés et de liant à base d'asphalte. La couche de revêtement peut inclure un ou plusieurs polymères résistants à l'eau, une cire ou des fines. Cette couche de revêtement a pour but d'empêcher l'adhésion des particules entre elles, mais aussi aux surfaces adjacente durant le stockage. Ce document ne divulgue pas la teneur en composé viscosifiant par rapport à la masse totale de la couche de revêtement. Il ne divulgue pas non plus la viscosité des composés entrant dans la composition de la couche de revêtement.

La Demanderesse a donc cherché à mettre au point des bitumes capables d'être soumis à des températures ambiantes élevées sans fluer, en particulier des bitumes sous forme de granules dont l'adhésion et l'agglomération lors de leur transport et/ou stockage et/ou manipulation à température ambiante élevée est réduite par rapport aux granules

de l'art antérieur.

Il existe donc un besoin de fournir un bitume routier transportable et/ou stockable et/ou manipulable à température ambiante, permettant de remédier aux inconvénients de l'art antérieur.

Un objectif de la présente invention est de fournir un bitume routier transportable et/ou stockable et/ou manipulable à température ambiante élevée, et dont les propriétés sont conservées au cours du temps.

En particulier, le but de la présente invention est de fournir un bitume routier transportable et/ou stockable pendant une durée supérieure à 2 mois, de préférence à 3 mois, et à température ambiante élevée, notamment à une température inférieure à 100°C, de préférence de 20°C à 80°C.

Un autre objectif de l'invention est de proposer un bitume routier facilement manipulable, notamment à température ambiante élevée, en particulier à une température allant jusqu'à 100°C, de préférence de 20°C à 80°C.

En particulier, le but de la présente invention est de fournir un bitume routier facilement manipulable après une durée de transport et/ou de stockage prolongée à température ambiante élevée, notamment pendant une durée de transport et/ou de stockage supérieure à 2 mois, de préférence supérieure à 3 mois, et à une température allant jusqu'à 100°C, de préférence entre 20°C et 80°C.

Un objectif de la présente invention est de fournir un bitume routier sous une forme qui permette son écoulement sous forme solide à température ambiante, de façon à pouvoir le manipuler sans perte de matière. On a cherché à fournir un bitume routier qui soit sous une forme permettant de le conditionner dans un emballage, de le déconditionner, de le transvaser dans un équipement, même à une température ambiante élevée, sans avoir besoin de le chauffer, et sans perte de matière. Le bitume proposé est sous forme divisée et solide à température ambiante de telle sorte qu'il permet de résoudre de façon satisfaisante les problèmes évoqués ci-dessus.

Un autre objectif est de proposer un procédé industriel et économique pour fabriquer du bitume routier transportable et/ou stockable à température ambiante.

Un autre objectif de l'invention est de proposer un procédé industriel et économique pour fabriquer des enrobés à partir de bitume routier transportable et/ou stockable à température ambiante.

Un autre objectif de l'invention est de proposer un procédé écologique et économique pour transporter et/ou stocker et/ou manipuler le bitume routier à température ambiante, permettant d'éviter l'utilisation de moyens supplémentaires pour le maintien en température dudit bitume lors du transport et/ou du stockage et/ou de la manipulation et permettant de minimiser la présence de déchets et/ou de résidus.

## Résumé de l'invention

L'invention a pour objet un bitume solide à température ambiante sous forme de granules comprenant un cœur et une couche de revêtement obtenue par l'application d'une composition comprenant au moins un composé viscosifiant et au moins un composé anti-agglomérant sur tout ou partie de la surface du cœur, dans lequel :

- le cœur comprend au moins une base bitume et,
- la couche de revêtement comprend au moins 10% en masse de composés viscosifiants par rapport à la masse totale de la couche de revêtement et au moins un composé anti-agglomérant.

L'invention concerne encore un procédé de fabrication d'un bitume solide à température ambiante sous forme de granules composées d'un cœur et d'une couche de revêtement du cœur, ce procédé comprenant :

i) la mise en forme du cœur à partir d'au moins une base bitume,
ii) l'enrobage du cœur sur tout ou partie de sa surface par une composition comprenant au moins 10% en masse d'un ou plusieurs composés viscosifiants par rapport à la masse totale de la couche de revêtement et au moins un composé anti-agglomérant,
iii) optionnellement, le séchage des granules obtenues à l'étape ii) à une température allant de 20 à 60 °C, pendant une durée allant de 5 minutes à 5 heures, de préférence de 5 minutes à 2 heures.

L'invention concerne également un bitume solide à température ambiante susceptible d'être obtenu par la mise en œuvre de ce procédé.

Selon un mode de réalisation préféré, le composé viscosifiant présente une viscosité dynamique supérieure ou égale à 50 $mPa.s^{-1}$, de préférence de 50 $mPa.s^{-1}$ à 550 $mPa.s^{-1}$, plus préférentiellement de 80 $mPa.s^{-1}$ à 450 $mPa.s^{-1}$, la viscosité étant une viscosité Brookfield mesurée à 65°C.

Selon un mode de réalisation préféré, le composé viscosifiant est choisi parmi :

- les composés gélifiants, de préférence d'origine végétale ou animale, tels que la gélatine, l'agar-agar, les alginates, les dérivés de cellulose, les amidons, les amidons modifiés, et les gommes gellanes ;

- les polyéthylène glycols (PEG) tels que les PEG ayant un poids moléculaire compris entre 800 $g.mol^{-1}$ et 8000 $g.mol^{-1}$ ;
- les mélanges de tels composés.

Selon un mode de réalisation particulièrement préféré, le composé viscosifiant est choisi parmi :

- les composés gélifiants, de préférence d'origine végétale ou animale, tels que la gélatine, l'agar-agar, les alginates, les dérivés de cellulose, et les gommes gellanes ;
- les polyéthylène glycols (PEG) tels que les PEG ayant un poids moléculaire compris entre 800 $g.mol^{-1}$ et 8000 $g.mol^{-1}$ ;
- les mélanges de tels composés.

Selon un mode de réalisation préféré, la couche de revêtement comprend de 10 à 90 % en masse d'au moins un composé viscosifiant par rapport à la masse totale de la couche de revêtement, de préférence de 10 à 85% en masse.

Selon un mode de réalisation préféré, le composé anti-agglomérant est choisi parmi : le talc ; les fines généralement de diamètre inférieur à 125 μm, telles que les fines silicieuses, à l'exception des fines calcaires ; le sable, tel que le sable de fontainebleau ; le ciment ; le carbone ; les résidus de bois tels que la lignine, le lignosulfonate, les poudres d'aiguilles de conifères, les poudres de cônes de conifères, notamment le pin; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique; la chaux, le plâtre ; la poudrette de caoutchouc ; la poudre de polymères, tels que les copolymères styrène-butadiène (SB), les copolymères styrène-butadiène-styrène (SBS) ; et leurs mélanges.

Selon un mode de réalisation préféré, la couche de revêtement comprend au moins 10% en masse d'au moins un composé anti-agglomérant par rapport à la masse totale de la couche de revêtement, de préférence de 10 à 90% en masse, encore plus préférentiellement de 15 à 90 % en masse.

Selon un mode de réalisation préféré, la base bitume présente une pénétrabilité à l'aiguille mesurée à 25°C selon la norme EN 1426 de 5 à 330 1/10 mm, de préférence de 20 à 220 1/10 mm.

Selon un mode de réalisation préféré, la base bitume comprend en outre au moins un additif chimique choisi parmi : un composé organique, une paraffine, un acide polyphosphorique et leurs mélanges.

Selon un mode de réalisation préféré, la base bitume présente une pénétrabilité de 5 à 45 1/10mm, mesurée à 25°C selon la norme EN 1426 et/ou une température de ramollissement bille et anneau supérieure ou égale à 90°C, la température de ramollissement bille et anneau étant mesurée selon la norme EN 1427.

Selon un mode de réalisation préféré, le bitume solide à température ambiante présente une stabilité au transport et au stockage à une température allant de 20 à 80°C pendant une durée supérieure ou égale à 2 mois, de préférence supérieure ou égale à 3 mois.

L'invention concerne également l'utilisation du bitume solide défini ci-dessus comme liant routier.

Selon un mode de réalisation préféré, l'utilisation concerne la fabrication d'enrobés.

L'invention concerne encore un procédé de fabrication d'enrobés comprenant au moins un liant routier et des granulats, le liant routier étant choisi parmi les bitumes définis ci-dessus, ce procédé comprenant au moins les étapes de :

- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

Selon un mode de réalisation préféré, le procédé de fabrication d'enrobés ne comporte pas d'étape de chauffage du liant routier avant son mélange avec les granulats.

L'invention concerne enfin un procédé de transport et/ou de stockage de bitume routier, ledit bitume routier étant transporté et/ou stocké sous forme de bitume solide à température ambiante tel que défini ci-dessus.

## Description détaillée

Les objectifs que la demanderesse s'est fixés ont été atteints grâce à la mise au point de compositions de bitume sous une forme divisée, présentant une structure cœur/enveloppe, dans laquelle le cœur est à base de bitume et la couche de revêtement confère à la structure globale des propriétés améliorées par rapport aux granules de bitumes connues de l'art antérieur.

Un premier objet de l'invention concerne un bitume solide à température ambiante sous forme de granules comprenant un cœur et une couche de revêtement obtenue par l'application d'une composition comprenant au moins un composé viscosifiant et au moins un composé anti-agglomérant sur tout ou partie de la surface du cœur, dans lequel :

- le cœur comprend au moins une base bitume et,
- la couche de revêtement comprend au moins 10% en masse de composés viscosifiants par rapport à la masse totale de la couche de revêtement et au moins un composé anti-agglomérant.

Par « température ambiante », on entend la température résultante des conditions climatiques dans lesquelles est transporté et/ou stocké le bitume routier. Plus précisément, la température ambiante équivaut à la température atteinte lors du transport et/ou du stockage du bitume routier, étant entendu que la température ambiante implique qu'aucun apport de chaleur n'est apporté autre que celui résultant des conditions climatiques.

L'invention concerne des bitumes susceptibles d'être soumis à une température ambiante élevée, en particulier une température allant jusqu'à 100°C, de préférence de 20°C à 80°C.

Par « bitume solide à température ambiante », on entend un bitume présentant un aspect solide à température ambiante quelles que soient les conditions de transport et/ou de stockage. Plus précisément, on entend par bitume solide à température ambiante, un bitume qui conserve son aspect solide tout au long du transport et/ou du stockage à température ambiante, c'est-à-dire un bitume qui ne flue pas à température ambiante sous son propre poids et de plus, qui ne flue pas lorsqu'il est soumis à des forces de pressions issues des conditions de transport et/ou de stockage.

Par « couche de revêtement recouvrant tout en partie de la surface du cœur », on entend que la couche de revêtement recouvre au moins 90% de la surface du cœur, de préférence au moins 95% de la surface du cœur, plus préférentiellement au moins 99% de la surface du cœur.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

- <u>Le composé viscosifiant :</u>

Les termes « viscosifiant » et « composé viscosifiant » sont utilisés au sens de l'invention, de manière équivalente et indépendamment l'un de l'autre. Par « viscosifiant » ou « composé viscosifiant », on entend un composé qui a la propriété de diminuer la fluidité d'un liquide ou d'une composition et donc d'en augmenter la viscosité.

Le viscosifiant au sens de l'invention est un matériau qui présente une viscosité dynamique supérieure ou égale à 50 $mPa.s^{-1}$, de préférence de 50 $mPa.s^{-1}$ à 550 $mPa.s^{-1}$, plus préférentiellement de 80 $mPa.s^{-1}$ à 450 $mPa.s^{-1}$, la viscosité étant une viscosité Brookfield mesurée à 65°C. La viscosité d'un viscosifiant selon l'invention est mesurée à 65°C au moyen d'un viscosimètre Brookfield CAP 2000+ et à une vitesse de rotation de 750 tr/min. La lecture de la mesure est réalisée après 30 secondes pour chaque température.

De préférence, le viscosifiant est choisi parmi :

- les composés gélifiants de préférence d'origine végétale ou animale, tels que : la gélatine, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 $g.mol^{-1}$ et 8000 $g.mol^{-1}$, comme par exemple un PEG ayant un poids moléculaire de 800 $g.mol^{-1}$ (PEG-800), un PEG ayant un poids moléculaire de 1000 $g.mol^{-1}$ (PEG-1000), un PEG ayant un poids moléculaire de 1500 $g.mol^{-1}$ (PEG-1500), un PEG ayant un poids moléculaire de 4000 $g.mol^{-1}$ (PEG-4000) ou un PEG ayant un poids moléculaire de 6000 $g.mol^{-1}$ (PEG-6000);
- les mélanges de tels composés.

Avantageusement, le viscosifiant est choisi parmi :

- les composés gélifiants de préférence d'origine végétale ou animale, tels que : la gélatine, l'agar-agar, les alginates, les dérivés de cellulose ou les gommes gellanes ;
- les polyéthylène glycols (PEG) tels que les PEG ayant un poids moléculaire compris entre 800 $g.mol^{-1}$ et 8000 $g.mol^{-1}$, comme par exemple un PEG ayant un poids moléculaire de 800 $g.mol^{-1}$ (PEG-800), un PEG ayant un poids moléculaire de 1000 $g.mol^{-1}$ (PEG-1000), un PEG ayant un poids moléculaire de 1500 $g.mol^{-1}$ (PEG-1500), un PEG ayant un poids moléculaire de 4000 $g.mol^{-1}$ (PEG-4000) ou un PEG ayant un poids moléculaire de 6000 $g.mol^{-1}$ (PEG-6000);
- les mélanges de tels composés.
- <u>Le composé anti-agglomérant</u> :

Le composé anti-agglomérant est d'origine minérale ou organique. Par « anti-agglomérant » ou « composé anti-agglomérant », on entend tout composé qui limite, réduit, inhibe, retarde, l'agglomération et/ou l'adhésion des granules entre eux lors de leur transport et/ou de leur stockage à température ambiante et qui assure leur fluidité lors

de leur manipulation.

Plus préférentiellement, le composé anti-agglomérant est choisi parmi : le talc ; les fines, également appelées "fillers", généralement de diamètre inférieur à 125 μm, telles que les fines silicieuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Avantageusement, le composé anti-agglomérant est choisi parmi : les fines, généralement de diamètre inférieur à 125 μm ; les résidus de bois tels que la lignine, les poudres d'aiguilles de conifères et les poudres de cônes de conifères ; leurs mélanges.

- <u>La couche de revêtement :</u>

La couche de revêtement est obtenue par application d'une composition comprenant au moins un composé viscosifiant et au moins un composé anti-agglomérant sur tout ou partie de la surface du cœur du bitume solide.

De préférence, la couche de revêtement est solide à température ambiante, y compris à température ambiante élevée.

De préférence, la composition comprenant au moins un composé viscosifiant et au moins un composé anti-agglomérant présente une viscosité supérieure ou égale à 200 $mPa.s^{-1}$, de préférence comprise entre 200 $mPa.s^{-1}$ et 700 $mPa.s^{-1}$, la viscosité étant une viscosité Brookfield.

La couche de revêtement comprend au moins 10% en masse de composés viscosifiants par rapport à la masse totale de la composition de revêtement.

Préférentiellement, la couche de revêtement comprend de 10 à 90 %en masse d'au moins un composé viscosifiant par rapport à la masse totale de la couche de revêtement, de préférence de 10 à 85% en masse.

Avantageusement, lorsque le vicosifiant est un gélifiant, comme par exemple de la gélatine, la couche de revêtement comprend de 10 à 90 % en masse de composé viscosifiant par rapport à la masse totale de la couche de revêtement, de préférence de 15 à 85%, encore mieux de 15 à 60%.

Avantageusement, lorsque le vicosifiant est un gélifiant, comme par exemple de la gélatine, la couche de revêtement comprend de 10 à 90 % en masse de composé anti-agglomérant par rapport à la masse totale de la couche de revêtement, de préférence de 15 à 85%, encore mieux de 40 à 85%.

Avantageusement, lorsque le vicosifiant est un PEG, comme par exemple un PEG ayant un poids moléculaire compris entre 800 $g.mol^{-1}$ et 8000 $g.mol^{-1}$, la couche de revêtement comprend de 10 à 90 % en masse de composé viscosifiant par rapport à la masse totale de la couche de revêtement, de préférence de 40 à 90%, encore mieux de 60 à 90%.

Avantageusement, lorsque le vicosifiant est un PEG, comme par exemple un PEG ayant un poids moléculaire compris entre 800 $g.mol^{-1}$ et 8000 $g.mol^{-1}$, la couche de revêtement comprend de 10 à 90 % en masse de composé anti-agglomérant par rapport à la masse totale de la couche de revêtement, de préférence de 10 à 60%, encore mieux de 10 à 40%.

Préférentiellement, la couche de revêtement comprend au moins 10% en masse d'un composé anti-agglomérant par rapport à la masse totale de la couche de revêtement, de préférence de 10 à 90% en masse, encore plus préférentiellement de 15 à 90 % en masse.

De préférence, la couche de revêtement représente au moins 5% en masse par rapport à la masse totale de la granule, de préférence de 10 à 60% en masse, plus préférentiellement de 10 à 50%.

Outre le composé viscosifiant et le composé anti-agglomérant, la couche de revêtement peut éventuellement comprendre un ou plusieurs composés choisis parmi : les additifs chimiques, les polymères, ...

Avantageusement, le composé viscosifiant et le composé anti-agglomérant représentent au moins 90% en masse par rapport à la masse totale de la couche de revêtement, encore mieux au moins 95% en masse et avantageusement au moins 98% en masse.

Selon un mode de réalisation préféré, la couche de revêtement est essentiellement constituée du composé viscosifiant et du composé anti-agglomérant.

- <u>Les granules :</u>

Selon l'invention, le bitume solide à température ambiante est conditionné sous une forme divisée, c'est-à-dire sous forme d'unités de petite taille, que l'on nomme granules ou particules, comportant un cœur à base de bitume et une enveloppe ou coque ou enrobage ou couche de revêtement ou revêtement.

De préférence, les granules de bitume solide selon l'invention peuvent avoir au sein d'une même population de granules, une ou plusieurs formes choisies parmi une forme cylindrique, sphérique ou ovoïde. La taille des granules de bitume est telle que la dimension moyenne la plus longue est de préférence inférieure ou égale à 50 mm, plus préférentiellement de 3 à 30 mm, encore plus préférentiellement comprise de 5 à 20 mm. La taille et la forme des granules de bitume peuvent varier selon le procédé de fabrication employé. Par exemple, l'utilisation d'une filière permet de contrôler la fabrication de granules d'une taille choisie. Un tamisage permet de sélectionner des granules en fonction de leur taille.

De préférence, les granules de bitume selon l'invention présentent un poids compris entre 0,1 g et 50 g, de préférence entre 0,2 g et 10 g, plus préférentiellement entre 0,2 g et 5 g.

Sans être liée à la théorie, la Demanderesse a découvert de manière inattendue que la combinaison d'un composé viscosifiant selon l'invention et d'un composé anti-agglomérant selon l'invention permet d'obtenir une couche de revêtement :

- qui est résistante aux conditions climatiques et aux conditions de transport et/ou de stockage du bitume routier solide,
- qui se casse facilement sous un effet de cisaillement mécanique, comme par exemple sous l'effet d'un cisaillement mécanique appliqué dans une cuve telle qu'un malaxeur ou un tambour-malaxeur lors de la fabrication d'enrobés.

Plus particulièrement, la couche de revêtement résiste au transport et/ou au stockage du bitume à température ambiante dans des « Big Bags » tout en étant cassante sous l'effet d'un cisaillement mécanique. Elle permet ainsi la libération du cœur en bitume lors de la fabrication d'enrobés.

Selon un mode de réalisation de l'invention, le bitume solide peut comprend en outre une ou plusieurs autres couches d'enrobage, à base d'anti-agglomérant recouvrant tout ou en partie la couche de revêtement du bitume solide selon l'invention.

Selon un mode de réalisation de l'invention particulièrement préféré, le bitume solide présente :

- un cœur comprenant au moins une base bitume et,
- une couche de revêtement comprenant de la gélatine ou un PEG et au moins un composé anti-agglomérant choisi parmi les fines généralement de diamètre inférieur à 125 μm ; les résidus de bois tels que la lignine, les poudres d'aiguilles de conifères et les poudres de cônes de conifères ; la poudrette de caoutchouc ; la poudre de copolymères SBS ; et leurs mélanges.

De manière encore préférée, le bitume solide présente :

- un cœur comprenant au moins une base bitume et,
- une couche de revêtement comprenant de la gélatine ou un PEG et au moins un composé anti-agglomérant choisi parmi les fines généralement de diamètre inférieur à 125 μm ; la lignine ; la poudrette de caoutchouc ; la poudre de copolymères SBS.

Selon un mode de réalisation encore préféré, le bitume solide est essentiellement constitué de :

- un cœur constitué d'une base bitume et,
- une couche de revêtement constituée d'un mélange de gélatine ou d'un PEG, avec au moins un composé anti-agglomérant choisi parmi les fines généralement de diamètre inférieur à 125 μm ; la lignine ; la poudrette de caoutchouc ; la poudre de copolymères SBS.

Selon un mode de réalisation avantageux, le bitume solide est essentiellement constitué de :

- un cœur constitué d'une base bitume comprenant un additif chimique et

- une couche de revêtement constituée d'un mélange de gélatine ou d'un PEG, avec au moins un composé anti-agglomérant choisi parmi les fines généralement de diamètre inférieur à 125 μm ; la lignine ; la poudrette de caoutchouc ; la poudre de copolymères SBS.

Selon un autre mode de réalisation encore préféré, le bitume solide est essentiellement constitué de :

- un cœur constitué d'une base bitume, comprenant un additif chimique de formule (I) défini ci-dessous et
- une couche de revêtement constituée d'un mélange de gélatine ou d'un PEG, avec au moins un composé anti-agglomérant choisi parmi les fines généralement de diamètre inférieur à 125 μm ; la lignine ; la poudrette de

caoutchouc ; la poudre de copolymères SBS.

- La base bitume

Avantageusement, le noyau ou cœur des granules de bitume solide selon l'invention est préparé à partir de bitume routier, ledit bitume routier étant préparé en mettant en contact :

- une ou plusieurs bases bitumes, et
- éventuellement au moins un additif chimique.

Au sens de l'invention, les termes « bitume » et « bitume routier » sont utilisés, de manière équivalente et indépendamment l'un de l'autre. Par « bitume » ou « bitume routier », on entend toutes compositions bitumineuses constituées d'une ou de plusieurs bases bitumes et comprenant éventuellement un ou plusieurs additifs chimiques, lesdites compositions étant destinées à une application routière.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Préférentiellement, la base bitume mise en œuvre pour fabriquer les granules de l'invention présente une pénétrabilité à l'aiguille mesurée à 25°C selon la norme EN 1426 de 5 à 330 1/10 mm, de préférence de 20 à 220 1/10 mm.

De manière bien connue, la mesure dite de « pénétrabilité à l'aiguille » est réalisée au moyen d'un test normalisé NF EN 1426 à 25°C ($P_{25}$). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

- L'additif chimique

La base bitume peut en outre comprendre au moins un additif chimique choisi parmi : un composé organique, une paraffine, un acide polyphosphorique et leurs mélanges.

En particulier, lorsque le bitume solide comprend au moins un additif chimique, la pénétrabilité visée pour la

base bitume additivée est de préférence de 5 à 45 1/10mm et/ou la température de ramollissement bille et anneau (TBA) visée est, de préférence, supérieure ou égale à 90°C, étant entendu que la pénétrabilité est mesurée à 25°C selon la norme EN 1426 et la TBA selon la norme EN 1427.

Selon un premier mode de réalisation de l'invention, l'additif chimique est un composé organique. Avantageusement, le composé organique présente une masse molaire inférieure ou égale à 2000 $gmol^{-1}$, de préférence une masse molaire inférieure ou égale à 1000 $gmol^{-1}$.

Dans ce premier mode de réalisation, selon une première variante, le composé organique est un composé de formule générale (I) :

Ar1-R-Ar2 (I),

dans laquelle :

- Ar1 et Ar2 représentent indépendamment l'un de l'autre un noyau benzène ou un système de noyaux aromatiques condensés de 6 à 20 atomes de carbones, substitués par au moins un groupe hydroxyle, et
- R représente un radical divalent éventuellement substitué, dont la chaîne principale comprend de 6 à 20 atomes de carbone et au moins un groupe choisi parmi les fonctions amide, ester, hydrazide, urée, carbamate, anhydride.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle.

De préférence, R est en position *para* par rapport à un groupe hydroxyle de Ar1 et/ou Ar2.

Avantageusement, le composé de formule (I) est le 2',3-bis[(3-[3, 5-di-*tert*-butyl-4-hydroxyphenyl]propionyl)]propionohydrazide.

Selon une seconde variante de ce premier mode de réalisation, le composé organique est un composé de formule générale (II) :

$R-(NH)_nCONH-(X)_m-NHCO(NH)_n-R'$ (II),

dans laquelle,

- les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
- le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
- n et m sont des entiers ayant une valeur de 0 ou 1 indépendamment l'un de l'autre.

Selon cette variante, lorsque l'entier m a une valeur de 0, alors les groupements $R-(NH)_nCONH$ et $NHCO(NH)_n-R'$ sont liés de façon covalente par une liaison hydrazide CONH-NHCO. Le groupement R, ou le groupement R', comprend alors au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

Toujours selon cette variante, lorsque l'entier m a une valeur de 1, alors le groupement R, le groupement R' et/ou le groupement X, comprend au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

De préférence, le groupement R et/ou R' comprend une chaîne hydrocarbonée aliphatique de 4 à 22 atomes de carbone, notamment, choisie parmi les groupements $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

De préférence, le groupement X représente une chaîne hydrocarbonée linéaire, saturée comprenant de 1 à 22 atomes de carbone. De préférence, le groupement X est choisi parmi les groupements $C_2H_4$, $C_3H_6$.

De préférence, le groupement X peut aussi être un groupement cyclohexyl ou un groupement phényl, les radicaux $R-(NH)_nCONH-$ et $NHCO(NH)_n-R'-$ peuvent alors être en position ortho, méta ou para. Par ailleurs, les radicaux $R-(NH)_nCONH-$ et $NHCO(NH)_n-R'-$peuvent être en position cis ou trans l'un par rapport à l'autre. De plus, lorsque le radical X est cyclique, ce cycle peut être substitué par d'autres groupements que les deux groupements principaux

$R-(NH)_nCONH-$ et $-NHCO(NH)_n-R'$.

De préférence, le groupement X comprend deux cycles de 6 carbones reliés par un groupement $CH_2$, ces cycles étant aliphatiques ou aromatiques. Dans ce cas, le groupement X est un groupement comportant deux cycles aliphatiques reliés par un groupement $CH_2$ éventuellement substitué comme par exemple :

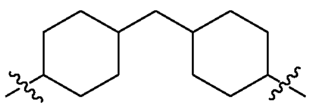
, ou
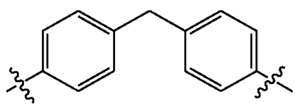

Avantageusement, selon cette variante, le composé organique est un composé de formule générale (II) choisi parmi les dérivés hydrazides tels que les composés $C_5H_{11}-CONH-NHCO-C_5H_{11}$, $C_9H_{19}-CONH-NHCO-C_9H_{19}$, $C_{11}H_{23}-CONH-NHCO-C_{11}H_{23}$, $C_{17}H_{35}-CONH-NHCO-C_{17}H_{35}$, ou $C_{21}H_{43}-CONH-NHCO-C_{21}H_{43}$ ; les diamides telles que la N,N'-éthylènedi(stéaramide) de formule $C_{17}H_{35}-CONH-CH_2-CH_2-NHCO-C_{17}H_{35}$ ; et les dérivés uréides tels que la 4,4'-bis(dodécylaminocarbonylamino)diphénylmethane de formule $C_{12}H_{25}-NHCONH-C_6H_4-CH_2-C_6H_4-NHCONH-C_{12}H_{25}$.

Selon une troisième variante de ce mode de réalisation, le composé organique est un composé de formule (III) :

$$(R-NHCO)_x-Z-(NHCO-R')_y \qquad \text{(III)},$$

dans laquelle,

- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants :

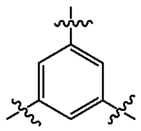
**$Z_1$**

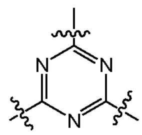
$Z_2$

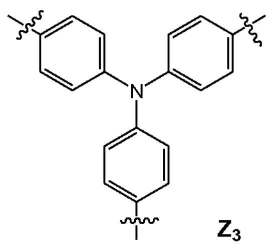
**$Z_3$**

- x et y sont des entiers différents de valeur variant de 0 à 3 et tels que x+y=3.

De préférence, lorsque x est égal à 0 et Z représente $Z_2$, le composé de formule (III) est la N2, N4, N6-tridécylmélamine ayant la formule suivante avec R' représentant le groupe $C_9H_{19}$ :

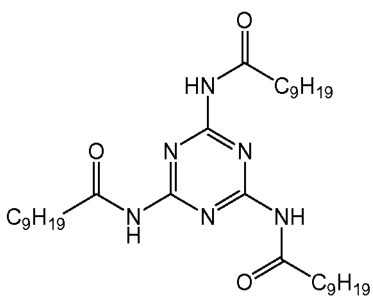

D'autres composés préférés répondant à la formule (III), sont tels que x est égal à 0, Z représente $Z_2$ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente $Z_1$, les composés ont alors pour formule :

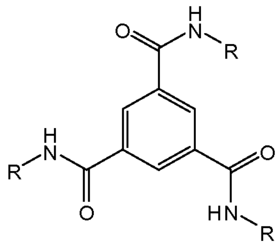

avec R choisi parmi les groupes suivants, pris seuls ou en mélanges :

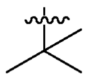 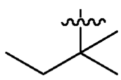 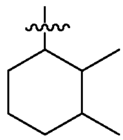 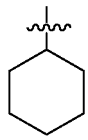 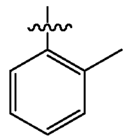

D'autres composés préférés répondant à la formule (III) sont tels que : y est égal à 0, Z représente $Z_1$ et R représente une chaîne hydrocarbonée saturée, linéaire, de 1 à 22 atomes de carbone, de préférence de 8 à 12 atomes de carbone.

Selon une quatrième variante de ce mode de réalisation, le composé organique est un produit de réaction d'au moins un polyol en C3-C12 et d'au moins un aldéhyde en C2-C12. Parmi les polyols utilisables, on peut citer le sorbitol, le xylitol, le mannitol et/ou le ribitol. De préférence, le polyol est le sorbitol.

Avantageusement, selon cette variante, le composé organique est un composé qui comprend au moins une fonction de formule générale (IV) :

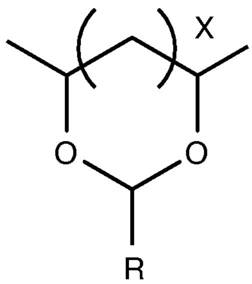

(IV)

Avec :

- x est un entier,
- R est choisi parmi un radical alkyle, alcényle, aryle, ou aralkyle en C1-C11, éventuellement substitué par un ou plusieurs atomes d'halogène, un ou plusieurs groupements alcoxy en C1-C6.

Le composé organique est avantageusement un dérivé du sorbitol. Par « dérivé du sorbitol », on entend tout produit de réaction, obtenu à partir du sorbitol. En particulier, tout produit de réaction obtenu en faisant réagir un aldéhyde avec du D-sorbitol. On obtient par cette réaction de condensation, des acétals de sorbitol, qui sont des dérivés du sorbitol. Le 1,3:2,4-Di-O-benzylidène-D-sorbitol est obtenu en faisant réagir 1 mole de D-sorbitol et 2 moles de benzaldéhyde et a pour formule :

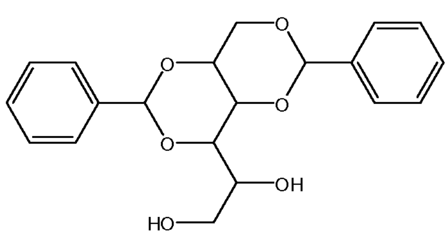

Les dérivés du sorbitol pourront ainsi être tous les produits de condensation d'aldéhydes, notamment d'aldéhydes aromatiques avec le sorbitol. On obtiendra alors des dérivés du sorbitol de formule générale :

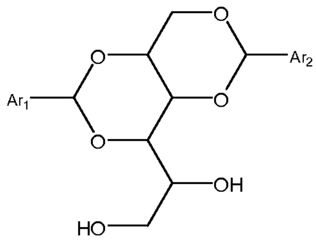

où $Ar_1$ et $Ar_2$ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol. De préférence, selon cette variante, le composé organique est le 1,3:2,4-Di-O-benzylidene-D-sorbitol.

Selon une cinquième variante de ce mode de réalisation, le composé organique est un composé de formule générale (V) :

$$R''\text{-}(COOH)_z \qquad (V),$$

dans laquelle R" représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R" est de préférence, une chaîne linéaire saturée de formule $C_wH_{2w}$ avec w un entier variant de 4 à 22, de préférence de 4 à 12.

Selon cette variante de l'invention, les composés organiques répondant à la formule (V) peuvent être des diacides (z = 2), des triacides (z = 3) ou des tétracides (z = 4). Les composés organiques préférés selon cette variante, sont des diacides avec z = 2.

De préférence, selon cette variante, les diacides ont pour formule générale $HOOC\text{-}C_wH_{2w}\text{-}COOH$ avec w un entier variant de 4 à 22, de préférence de 4 à 12 et où z = 2 et R" = $C_wH_{2w}$.

Avantageusement, selon cette variante, le composé organique est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en $C_8$ à $C_{34}$, notamment en $C_{12}$ à $C_{22}$, en particulier en $C_{16}$ à $C_{20}$, et plus particulièrement en $C_{18}$. Un dimère d'acide gras préféré est obtenu par dimérisation de l'acide linoléïque, celui-ci pouvant ensuite être partiellement ou totalement hydrogéné. Un autre dimère d'acide gras préféré a pour formule $HOOC\text{-}(CH_2)_7\text{-}CH{=}CH\text{-}(CH_2)_7\text{-}COOH$. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon une sixième variante de ce mode de réalisation, le composé organique est un composé de formule générale (VI) :

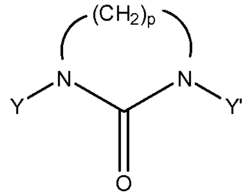

(VI)

dans laquelle,

- les groupements Y et Y' représentent indépendamment l'un de l'autre, un atome ou groupement choisi parmi : H, $-(CH_2)q-CH_3$, $-(CH_2)q-NH_2$, $-(CH_2)q-OH$, $-(CH_2)q-COOH$ ou

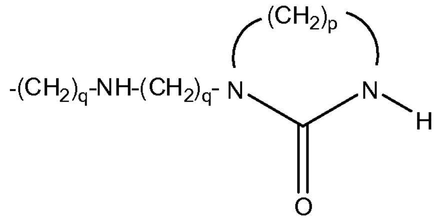

avec q un entier variant de 2 à 18, de préférence de 2 à 10, de préférence de 2 à 4 et p un entier supérieur ou égal à 2, de préférence ayant une valeur de 2 ou 3.

Parmi les composés organiques préférés répondant à la formule (VI), on peut citer les composés suivants :

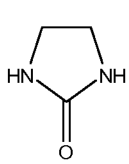
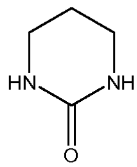
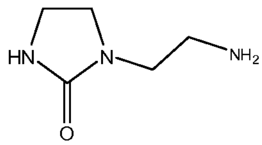

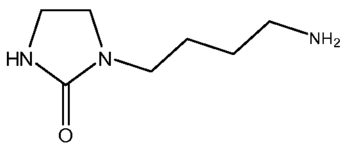
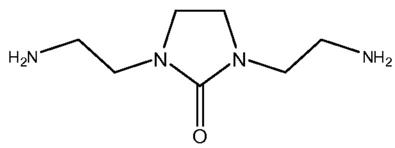

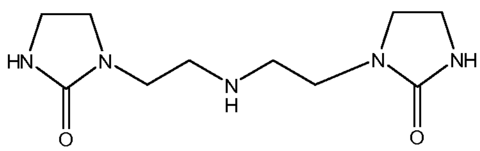

De préférence, selon cette variante, le composé organique de formule générale (VI) est :

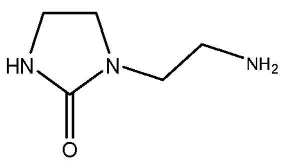

Selon une septième variante de ce mode de réalisation, le composé organique est un composé de formule générale (VII) :

R-NH-CO-CO-NH-R' (VII)

dans laquelle, R et R', identiques ou différents, représentent une chaîne hydrocarbonée saturée ou insaturée, linéaire, ramifiée ou cyclique, comprenant de 1 à 22 atomes de carbone, de préférence de 8 à 12 atomes de carbone, éventuellement substituée, et comprenant éventuellement des hétéroatomes, des cycles et/ou des hétérocycles.

Selon un autre mode de réalisation de l'invention, l'additif chimique est une paraffine. Les paraffines présentent des longueurs de chaînes de 30 à 120 atomes de carbone ($C_{30}$ à $C_{120}$). Les paraffines sont avantageusement choisies parmi les polyalkylènes. De préférence, on utilisera selon l'invention des paraffines de polyméthylène et des paraffines de polyéthylène. Ces paraffines pourront être d'origine pétrolière ou provenir de l'industrie chimique. Avantageusement, les paraffines utilisées sont des paraffines synthétiques issues de la conversion de la biomasse et/ou du gaz naturel.

De préférence, ces paraffines contiennent une grande proportion de paraffines dites « normales » c'est-à-dire de paraffines linéaires à chaîne droite, non ramifiées (hydrocarbures saturés). Ainsi, les paraffines peuvent comprendre de 50 à 100% de paraffines normales et de 0 à 50% d'isoparaffines et/ou de paraffines ramifiées. Plus préférentiellement, les paraffines comprennent de 85 à 95% de paraffines normales et de 5 à 15% d'isoparaffines et/ou de paraffines ramifiées. Avantageusement, les paraffines comprennent de 50 à 100% de paraffines normales et de 0 à 50% d'isoparaffines. Encore plus avantageusement, les paraffines comprennent de 85 à 95% de paraffines normales et de 5 à 15% d'isoparaffines.

De préférence, les paraffines sont des paraffines de polyméthylène. Plus particulièrement, les paraffines sont des paraffines synthétiques de polyméthylène, par exemple des paraffines issues de la conversion de gaz de synthèse par le procédé Fischer-Tropsch. Dans le procédé Fischer-Tropsch, les paraffines sont obtenues par réaction de l'hydrogène avec de l'oxyde de carbone sur un catalyseur métallique. Des procédés de synthèse Fischer-Tropsch sont décrits par exemple dans les publications EP 1 432 778, EP 1 328 607 ou EP 0 199 475.

Selon un autre mode de réalisation de l'invention, l'additif chimique est un acide polyphosphorique. Les acides polyphosphoriques (PPA) utilisables dans l'invention sont décrits dans WO 97/14753. Ce sont des composés de formule brute PqHrOs dans laquelle q, r et s sont des nombres positifs tels que : q ≥ 2 et notamment q va de 3 à 20 ou plus et que 5q+r-2s=0.

En particulier, lesdits acides polyphosphoriques peuvent être des composés linéaires de formule brute $P_qH_{(q+2)}O_{(3q+1)}$ correspondant à la formule développée :

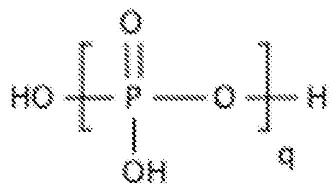

Où q a la définition donnée ci-dessus. Ils peuvent encore être des produits de structure bidimensionnelle ou tridimensionnelle.

Tous ces acides polyphosphoriques peuvent être considérés comme des produits de polycondensation par chauffage de l'acide métaphosphorique aqueux.

On ne sortira pas du cadre de l'invention en combinant plusieurs additifs chimiques différents tels que différents composés organiques de formule (I), (II), (III), (V), (VI) et (VII), les produits de réaction d'au moins un polyol en C3-C12 et d'au moins un aldéhyde en C2-C12, notamment ceux comprenant un groupement de formule (IV), et/ou différentes paraffines et/ou différents acides polyphosphoriques dans la base bitume.

Selon un mode de réalisation de l'invention, la base de bitume dont est composé le cœur des granules comprend de 0,1% à 10% en masse, de préférence de 0,5% à 5% en masse, plus préférentiellement de 0,5% à 2,5% en masse d'additif chimique par rapport à la masse totale dudit coeur.

Selon un mode de réalisation de l'invention, le cœur peut en outre comprendre au moins un adjuvant polymère oléfinique.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.

(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.

(b) Les terpolymères sont, avantageusement, choisis parmi les terpolymères statistiques ou séquencés, de préférence statistiques, d'éthylène, d'un monomère A et d'un monomère B. Le monomère A est choisi parmi l'acétate de vinyle et les acrylates ou méthacrylates d'alkyle en $C_1$ à $C_6$.
Le monomère B est choisi parmi l'acrylate de glycidyle et le méthacrylate de glycidyle. Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en $C_1$ à $C_6$, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

Avantageusement, l'adjuvant polymère oléfinique est choisi parmi les terpolymères statistiques d'éthylène (b), d'un monomère A choisi parmi les acrylates ou méthacrylates d'alkyle en $C_1$ à $C_6$ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation de l'invention, la base de bitume dont est composé le cœur des granules comprend de 0,05% à 15% en masse, de préférence de 0,1% à 10% en masse, plus préférentiellement de 0,5% à 6% en masse de l'adjuvant polymère oléfinique par rapport à la masse totale dudit coeur.

Selon un mode de réalisation de l'invention, le noyau peut également comprendre d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO2007/058994, WO2008/137394 et par la demanderesse dans la demande de brevet WO11/013073.

- Procédé de fabrication des granules :

Un autre objet de l'invention concerne un procédé de fabrication d'un bitume solide à température ambiante sous forme de granules composées d'un cœur et d'une couche de revêtement du cœur, ce procédé comprenant :

i) la mise en forme du cœur à partir d'au moins une base bitume,
ii) l'enrobage du cœur sur tout ou partie de sa surface par une composition comprenant au moins un composé viscosifiant et au moins un composé anti-agglomérant,
iii) optionnellement, le séchage des granules obtenues à l'étape ii) à une température allant de 20 à 60 °C, pendant une durée allant de 5 minutes à 5 heures, de préférence de 5 minutes à 2 heures.

De préférence, l'étape ii) d'application se fait par trempage, pulvérisation, co-extrusion, etc.

La mise en forme du cœur des granules à partir d'une base bitume éventuellement additivée peut être réalisée selon tout procédé connu, par exemple selon le procédé de fabrication décrit dans le document US 3 026 568, le document WO 2009/153324 ou le document WO 2012/168380. Selon un mode de réalisation particulier, la mise en forme du cœur du bitume solide peut être réalisée par égouttage, en particulier à l'aide d'un tambour.

D'autres techniques peuvent être utilisées dans le procédé de fabrication du coeur de bitume solide, en particulier le moulage, le pastillage, l'extrusion...

De préférence, les particules de cœur de bitume solide présentent une dimension moyenne la plus longue allant de 1 à 30 mm, avantageusement de 5 à 20 mm.

De préférence, lors de la mise en œuvre du procédé de l'invention, le ratio en masse de la composition d'enrobage comprenant au moins un composé viscosifiant et au moins un composé anti-agglomérant par rapport à la masse de base bitume, éventuellement additivée, formant le cœur est de 0,1 à 1, avantageusement de 0,2 à 0,9.

Un autre objet de l'invention est un bitume solide à température ambiante sous forme de granules susceptible

d'être obtenu par la mise en œuvre du procédé selon l'invention tel que décrit ci-dessus. Un tel bitume solide sous forme de granules présente avantageusement les propriétés décrites ci-dessus.

- Utilisations des granules de bitume solide :

Un autre objet de l'invention concerne également l'utilisation des granules de bitume solide à température ambiante selon l'invention tel que décrit ci-dessus comme liant routier.

Le liant routier peut être employé pour fabriquer des enrobés, en association avec des granulats selon tout procédé connu.

De préférence, le bitume solide à température ambiante selon l'invention est utilisé pour la fabrication d'enrobés.

Les enrobés bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

Un autre objet de l'invention concerne un procédé de fabrication d'enrobés comprenant au moins un liant routier et des granulats, le liant routier étant choisi parmi les bitumes selon l'invention,
ce procédé comprenant au moins les étapes de :

- chauffage des granulats à une température allant de 100°C à180°C, de préférence de 120°C à 160°C,
- mélange des granulats avec le liant routier dans une cuve telle qu'un malaxeur ou un tambour malaxeur,
- obtention d'enrobés.

Le procédé de l'invention présente l'avantage de pouvoir être mis en œuvre sans étape préalable de chauffage des granules de bitume solide.

Le procédé de fabrication d'enrobés selon l'invention ne requiert pas d'étape de chauffage des granules de bitume solide avant mélange avec les granulats car au contact des granulats chauds, le bitume solide à température ambiante fond.

Le bitume solide à température ambiante selon l'invention tel que décrit ci-dessus présente l'avantage de pouvoir être ajouté directement aux granulats chauds, sans avoir à être fondu préalablement au mélange avec les granulats chauds.

De préférence, l'étape de mélange des granulats et du liant routier est réalisée sous agitation, puis l'agitation est maintenue pendant au plus 5 minutes, de préférence au plus 1 minute pour permettre l'obtention d'un mélange homogène.

Le bitume solide sous forme de granules selon la présente invention est remarquable en ce qu'il permet le transport et/ou le stockage de bitume routier à température ambiante dans des conditions optimales, en particulier sans qu'il y ait agglomération et/ou adhésion du bitume solide lors de son transport et/ou son stockage, même lorsque la température ambiante est élevée. Par ailleurs, la couche de revêtement des granules casse sous l'effet du contact avec les granulats chauds et du cisaillement et il libère la base bitume. Enfin, la présence de la couche de revêtement dans le mélange de liant routier et de granulats ne dégrade pas les propriétés dudit bitume routier pour une application routière, comparativement à une base bitume non enrobée.

- Procédé de transport et/ou de stockage et/ou de manipulation de bitume routier

Un autre objet de l'invention concerne également un procédé de transport et/ou de stockage et/ou de manipulation de bitume routier, ledit bitume routier étant transporté et/ou stocké et/ou manipulé sous forme de granules de bitume solides à température ambiante.

De préférence, le bitume routier est transporté et/ou stocké à une température ambiante élevée pendant une durée supérieure ou égale à 2 mois, préférence à 3 mois.

De préférence, la température ambiante élevée est de 20°C à 90°C, de préférence de 20°C à 80°C, plus préférentiellement de 40°C à 80°C, encore plus préférentiellement de 40°C à 60°C.

Les granules de bitume selon l'invention présentent l'avantage de conserver leur forme divisée, et donc de pouvoir être manipulés, après un stockage et/ou un transport à une température ambiante élevée. Ils présentent en particulier la capacité de s'écouler sous leur propre poids sans fluer, ce qui permet leur stockage dans un conditionnement en sacs, en fûts ou en containers de toutes formes et de tous volumes puis leur transvasement depuis ce conditionnement vers un équipement, comme un équipement de chantier (cuve, mélangeur etc...).

Les granules de bitume sont, de préférence, transportés et/ou du stockés en vrac dans des sacs de 1 kg à 100

kg ou de 500 kg à 1000 kg couramment appelés dans le domaine des bitumes routiers des « Big Bag », lesdits sacs étant de préférence en matériau thermofusible. Ils peuvent également être transportés et/ou stockés en vrac dans des cartons de 5 kg à 30 kg ou dans des fûts de 100 kg à 200 kg.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

## Exemples

### Matériel et méthodes

Les caractéristiques rhéologiques et mécaniques des bitumes auxquelles on fait référence dans ces exemples sont mesurées de la façon indiquée dans le tableau 1.

**Tableau 1**

| Propriété | Abréviation | Unité | Norme de mesure |
|---|---|---|---|
| Pénétrabilité à l'aiguille à 25°C | $P_{25}$ | 1/10 mm | NF EN 1426 |
| Température de ramollissement bille et anneau | TBA | °C | NF EN 1427 |

La variation de la température de ramollissement bille et anneau (TBA) est mesurée selon la norme NF EN 1427 de ladite composition entre l'échantillon extrait de la partie haute du tube d'échantillon et l'échantillon extrait de la partie basse du tube d'échantillon.

Les bases bitumes $\mathbf{B_2}$ à $\mathbf{B_5}$ sont préparées à partir :

- d'une base bitume de grade 35/50, notée $\mathbf{B_1}$**,** ayant une pénétrabilité $P_{25}$ de 34 1/10 mm et une TBA de 52,6°C et disponible commercialement auprès du groupe TOTAL sous la marque AZALT® ;
- d'un copolymère séquencé styrène/butadiène/styrène (**SBS**)**,** à 30,5% en poids de styrène et à 69,5% en poids de butadiène. La teneur en groupement 1,2-vinyle est de 27,8 % en poids par rapport au poids total de copolymère. Le copolymère a une masse moléculaire en poids (Mw) de 142 500 Daltons et un indice de polydispersité $I_p$ de 1,09. Ce copolymère est disponible commercialement auprès de la société KRATON sous le nom D1192 ;
- d'un additif chimique, le 2',3-bis[[3-[3,5-di-tert-butyl-4-hydroxyphényl]propionyl]] propionohydrazide, noté **hydrazide;**
- de l'acide 1, 10 décanoïque noté **acide;**
- de la fleur de soufre, noté **réticulant** ;
- de l'octanoate de zinc ; noté **scavenger.**

Les quantités en pourcentage massique utilisées pour chaque bitume sont indiquées dans le tableau 2 ci-dessous.

**Tableau 2**

| Bitume | $B_2$ | $B_3$ | $B_4$ | $B_5$ |
|---|---|---|---|---|
| Base bitume $\mathbf{B_1}$ | 99,1% | 98,5% | 95,4% | 94,8% |
| Hydrazide | 0 ,9% | - | 0,9% | - |
| Acide | - | 1,5% | - | 1,5% |
| SBS | - | - | 3,4% | 3,4% |
| Réticulant | - | - | 0,1 | 0,1 |
| Scavenger | - | - | 0,2 | 0,2 |
| P25 (1/10 mm) | 17 | 14 | 22 | 21 |
| TBA (°C) | 107 | 93 | 34 | 37 |

La quantité d'additifs pour chaque bitume est ajustée de manière à obtenir des bitumes ayant des propriétés

mécaniques équivalentes, notamment une pénétrabilité $P_{25}$ et une TBA proches.

Les bitumes sont préparés de la manière suivante.

Pour le bitume **$B_2$**, on introduit la base bitume **$B_1$** dans un réacteur maintenu à 160°C sous agitation à 300 tours/min pendant deux heures. On introduit ensuite dans le réacteur l'hydrazide. Le contenu du réacteur est maintenu à 160°C sous agitation à 300 tours/min pendant 1 heure.

Le bitume **$B_3$** est préparé à partir de la base bitume **$B_1$** et de l'acide de la même manière que le bitume **$B_2$**.

Pour le bitume **$B_4$**, on introduit dans un réacteur maintenu à 185°C et sous agitation à 300 tours/min, la base bitume **$B_1$** et le copolymère SBS. Le contenu du réacteur est ensuite maintenu à 185°C sous agitation à 300 tours/min pendant 4 heures. On ajoute 0,1% de réticulant, on laisse réagir pendant 2h à 185°C sous agitation à 300 tours/min et on ajoute 0,2% de scavenger à 185°C sous agitation à 300 tours/min pendant 20 mn. On descend la température à 160°C sous agitation à 300 tours/min, puis on ajoute l'hydrazide sous forme de granulés. Le mélange est agité pendant environ 1 heure à 160°C pour obtenir un aspect final homogène. Le mélange est refroidi à température ambiante.

Le bitume **$B_5$** est préparé comme le bitume **$B_4$** en utilisant de l'acide à la place de l'hydrazide.

## 1. Préparation des différents granulés de bitumes solides $G_1$, $G_2$, $G_3$, $G_4$, $G_5$, $G_6$, $G_7$, $G_8$, $G_9$ et $G_{10}$

### 1.1 Méthode générale pour la préparation des cœurs en bitume des granules selon l'invention

La base bitume **($B_2$ à $B_5$)** est réchauffée à 160°C pendant deux heures à l'étuve avant d'être coulée dans un moule en silicone présentant différents trous de forme sphérique de façon à former les cœurs de bitume solide. Après avoir constaté la solidification du bitume dans le moule, le surplus est arasé avec une lame chauffée au bec bunsen. Après 30 minutes, le bitume solide sous forme de granules non enrobées est démoulé et stocké dans un plateau recouvert de papier siliconé. On laisse ensuite refroidir les cœurs en bitume à température ambiante pendant 10 à 15 minutes.

### 1.2 Méthode générale pour la préparation des granules de bitume solide selon l'invention comprenant une couche de revêtement (PEG-4000 et lignine)

Une composition est préparée en faisant fondre à l'étuve du PEG-4000 à une température comprise entre 70°C et 80°C pendant une durée comprise entre une à deux heures. La lignine est ajoutée à chaud sous agitation dans cette composition.

Les cœurs en bitume préalablement obtenus en 1.1 sont piqués sur une aiguille avant d'être plongés dans la composition de revêtement, toujours à l'étuve, sous agitation.

Les granules de bitumes enrobées sont déposées sur une plaque en silicone. Optionnellement, les granules de bitume solide enrobées ainsi obtenues peuvent être enrobées d'une couche supplémentaire avec la poudre de lignine.

Les granules de bitume solide ainsi obtenues sont laissées à l'air libre pendant au moins 2 heures et à température ambiante pour solidifier la couche de revêtement.

On obtient ainsi des granules de bitume solide à structure cœur/enveloppe selon l'invention.

Les quantités de PEG-4000 et de lignine peuvent varier en fonction de la viscosité de la composition souhaitée.

Une composition $C_1$ a été préparée comprenant 80% en poids de PEG-4000 et 20% en poids de lignine.

### 1.3 Méthode générale pour la préparation des granules de bitume solide selon l'invention comprenant une couche de revêtement (gélatine et lignine) ou (gélatine et poudrette de caoutchouc) ou (gélatine et poudre de copolymère styrène-butadiène-styrène)

La gélatine, sous forme de plaque, est trempée dans l'eau froide pendant 10 minutes jusqu'à 80% d'eau absorbée puis placée sous étuve à 70°C. La lignine, préalablement séchée à 110°C pendant deux heures durant, est ajoutée à chaud dans la gélatine.

Les cœurs en bitume préalablement obtenus en 1.1 sont piqués sur une aiguille avant d'être plongés dans la composition de revêtement préalablement obtenue, toujours à l'étuve, sous agitation.

Les granules de bitumes enrobées sont déposées sur une plaque en silicone. Optionnellement, les granules de bitume solide enrobées ainsi obtenues peuvent être enrobées d'une couche supplémentaire avec la poudre de lignine.

Les granules de bitume solide enrobées ainsi obtenues sont laissées à l'air libre pendant quelques minutes puis sont ensuite recuites à 50°C pendant une durée comprise entre une et deux heures pour solidifier la couche de revêtement.

On obtient ainsi des granules de bitume solide à structure cœur/enveloppe selon l'invention.

Les quantités de gélatine, d'eau et de composé anti-agglomérant peuvent varier en fonction de la viscosité de la composition souhaitée.

Les compositions (gélatine et lignine ou poudrette de caoutchouc ou poudre de copolymère SBS) C2, C3, C4,

C5 et C6 ont été préparées selon le Tableau 3.

**Tableau 3**

| | Gélatine (% en masse) | Lignine (% en masse) | Poudrette de caoutchouc (% en masse) | Poudre de SBS (% en masse) | Eau (% en masse) |
|---|---|---|---|---|---|
| C2 | 16 | 15 | - | - | 69 |
| C3 | 14 | 13 | - | - | 73 |
| C4 | 11,1 | - | 44,4 | - | 44,5 |
| C5 | 11,1 | - | - | 44,4 | 44,5 |
| C6 | 11,1 | 44,4 | - | - | 44,5 |

1.4 Préparation de différents bitumes solides selon l'invention

Un bitume solide $\mathbf{G_1}$ (essai témoin) a été préparé selon la méthode décrite au point 1.1, puis poudré avec de la lignine. $\mathbf{G_1}$ est composé d'un cœur en bitume obtenu par la mise en forme de la base $\mathbf{B_2}$ et d'une couche d'anti-agglomérant composée de filler (fines).

Un bitume solide $\mathbf{G_2}$ (essai témoin) a été préparé selon la méthode décrite au point 1.1, puis poudré avec de la lignine. $\mathbf{G_2}$ est composé d'un cœur en bitume obtenu par la mise en forme de la base $\mathbf{B_2}$ et d'une couche d'anti-agglomérant composée de lignine.

Un bitume solide $\mathbf{G_3}$ selon l'invention a été préparé selon les méthodes décrites aux points 1.1 et 1.2 et est composé d'un cœur en bitume obtenu par la mise en forme de la base $\mathbf{B_3}$ et d'une couche de revêtement obtenue à partir de la composition C1.

Un bitume solide $\mathbf{G_4}$ selon l'invention a été préparé selon les méthodes décrites aux points 1.1 et 1.3 et est composé d'un cœur en bitume obtenu par la mise en forme de la base $\mathbf{B_3}$ et d'une couche de revêtement obtenue à partir de la composition C2.

Un bitume solide $\mathbf{G_5}$ selon l'invention a été préparé selon les méthodes décrites aux points 1.1 et 1.3 et est composé d'un cœur en bitume obtenu par la mise en forme de la base $\mathbf{B_3}$ et d'une couche de revêtement obtenue à partir de la composition C3.

Un bitume solide $\mathbf{G_6}$ (essai témoin) a été préparé selon la méthode décrite au point 1.1 puis enrobé de gélatine. $\mathbf{G_6}$ est composé d'un cœur en bitume obtenu par la mise en forme de la base $\mathbf{B_3}$ et d'une couche d'anti-agglomérant composée de filler (fines).

Un bitume solide $\mathbf{G_7}$ (essai témoin) a été préparé selon la méthode décrite au point 1.1 puis enrobé de gélatine. $\mathbf{G_7}$ est composé d'un cœur en bitume obtenu par la mise en forme de la base $\mathbf{B_3}$ et d'une couche d'anti-agglomérant composée de lignine.

Un bitume solide $\mathbf{G_8}$ selon l'invention a été préparé selon les méthodes décrites aux points 1.1 et 1.3 et est composé d'un cœur en bitume obtenu par la mise en forme de la base $\mathbf{B_3}$ et d'une couche de revêtement obtenue à partir de la composition C4.

Un bitume solide $\mathbf{G_9}$ selon l'invention a été préparé selon les méthodes décrites aux points 1.1 et 1.3 et est composé d'un cœur en bitume obtenu par la mise en forme de la base $\mathbf{B_3}$ et d'une couche de revêtement obtenue à partir de la composition C5.

Un bitume solide $\mathbf{G_{10}}$ selon l'invention a été préparé selon les méthodes décrites aux points 1.1 et 1.3 et est composé d'un cœur en bitume obtenu par la mise en forme de la base $\mathbf{B_3}$ et d'une couche de revêtement obtenue à partir de la composition C6.

**2. Essai de résistance à la charge des bitumes solides $G_1$, $G_2$, $G_3$, $G_4$, $G_5$, $G_6$, $G_7$ et $G_{10}$ sous forme de granules enrobées**

Cet essai est mis en œuvre afin d'évaluer la résistance à la charge des granules $\mathbf{G_1}$ à $\mathbf{G_7}$ et G10 à une température de 50°C sous un effort en compression. En effet, cet essai permet de simuler les conditions de température et de compression des granules les unes sur les autres auxquelles elles sont soumises lors du transport et/ou du stockage en vrac dans des sacs de 10 à 100 kg ou dans des Big Bag de 500 à 1000 kg ou dans des fûts de 200 kg et d'évaluer leur résistance dans ces conditions.

L'essai de résistance à la charge est réalisé à l'aide d'un analyseur de texture commercialisé sous le nom LF Plus par la société LLOYD Instruments et équipé d'une enceinte thermique. Pour ce faire, un récipient métallique de

diamètre 25 mm contenant une masse de 10 g de granules de bitume est placée à l'intérieur de l'enceinte thermique réglée à une température de 50°C pendant 1 heure. Le piston de l'analyseur de texture est un cylindre de diamètre 20 mm et de hauteur 60 mm. Le piston cylindrique est au départ placé au contact de la couche supérieure des granules. Ensuite, il se déplace verticalement vers le bas, à une vitesse constante de 0,5 mm/min sur une distance calibrée de 5 mm de manière à exercer une force de compression sur l'ensemble des granules placés dans le récipient. Après retrait du piston, on évalue visuellement la tenue à la compression des granules, notamment leur apparence et leur aptitude à s'agglomérer. Les observations sont répertoriées dans le tableau 4 ci-dessous.

**Tableau 4**

| **Granules** | **$G_1$ (témoin)** | **$G_2$ (témoin)** | **$G_3$** | **$G_4$** | **$G_5$** | **$G_6$ (témoin)** | **$G_7$ (témoin)** | **$G_{10}$** |
|---|---|---|---|---|---|---|---|---|
| Tenue à la charge à 50°C | + | + | ++ | +++ | +++ | +- | +- | +++ |
| +++ : les granules conservent leur forme initiale et n'adhèrent pas entre elles.<br>++ : les granules n'adhérent pas entre elles mais ne présentent plus leur forme arrondie.<br>+ : les granules adhèrent légèrement entre elles.<br>- : les granules sont assez fondues.<br>-- : les granules sont fondues. | | | | | | | | |

Les granules **$G_3$, $G_4$, $G_5$ et $G_{10}$** selon l'invention présentent une très bonne résistance à la charge à 50°C dans la mesure où elles n'adhèrent pas entre elles. En outre les granules **$G_4$ et $G_5$** conservent leur forme initiale. Les granules **$G_3$, $G_4$** et **$G_5$** résistent bien aux conditions de compression et de température comparativement aux granules témoins **$G_1$, $G_2$, $G_6$** et **$G_7$** qui auront tendance à s'agglomérer lors de leur transport ou de leur stockage, notamment à des températures supérieures ou égales à 50°C. Ainsi, la manipulation desdits granules **$G_1$, $G_2$, $G_6$** et **$G_7$** sera moins aisée comparativement aux granules **$G_3$, $G_4$** et **$G_5$.** En particulier, si les granules de bitume sont transportées dans des sacs ou Big Bag, les granules **$G_1$**, **$G_2$, $G_6$** et **$G_7$** agglomérés risquent davantage de fuir hors des sacs ou Big Bag, rendant difficile la manipulation desdits sacs ou Big Bag qui auront tendance à coller entre eux. Leur transvasement dans un équipement de chantier peut également être difficile en raison de leur comportement.

## 3. Fabrication d'enrobés bitumineux

Les enrobés sont préparés selon le mode opératoire suivant :
Tout d'abord, 4,5 kilos de granulats ont été chauffés à 160 °C et placés dans un malaxeur. Puis, 285 g de granulés de bitume solide **$G_{10}$** avec une coque gélatine/lignine (20/80) ont été versés sur les granulats préalablement chauffés à 160°C.

Après 70 secondes de malaxage (environ 10 secondes de plus par rapport à un liant chaud introduit dans les mêmes conditions), le bitume est venu enrober d'une manière homogène les granulats qui sont devenus brillants et collants.

## 4. Essai d'adhésivité passive des enrobés bitumineux obtenus en 3.

L'adhésivité passive est mesurée selon une méthode adaptée de la norme NFT 66-018 et cette mesure s'apprécie de manière visuelle.

Les enrobés obtenus au point **3** sont immergés dans un récipient rempli d'eau chauffée à 60°C pendant une durée de 16 heures.

Parallèlement, les enrobés obtenus avec la base bitume B1 selon le procédé décrit au point **3**, sont immergés dans un récipient rempli d'eau chauffée à 60°C pendant une durée de 16 heures. Au bout de 16 heures, aucune différence visuelle entre ces deux types d'enrobés n'est observée et la surface est totalement recouverte par le liant (100%)

Par conséquent, la nature de la coque des granulés de bitume n'a pas d'influence sur l'adhésivité des enrobés produits à partir de ces granulés.

## 5. Essai Duriez

Les performances mécaniques des enrobés obtenus au point 3 sont mesurées en réalisant l'essai Duriez : détermination de la sensibilité à l'eau des éprouvettes bitumineuses (encore appelé « essai de résistance au désenrobage à l'eau ») selon la norme NF EN 12697-12-B qui évalue l'adhésion entre le liant bitumineux et les granulats.

Le terme résistance est défini par :

$C_w$ : résistance à la compression moyenne en kilopascals (kPa) du lot « humide ».
$C_w$ est mesurée sur des éprouvettes stockées dans l'eau à 18°C pendant 7 jours.
$C_d$ : résistance à la compression moyenne en kilopascals (kPa) du lot « sec ».
$C_d$ est mesurée sur des éprouvettes stockées à l'air pendant 7 jours à 18°C.

Le rapport immersion-compression, i/C, est définie selon la formule suivante :

$$i/C= [100^* (C_w/C_D)]$$

Le résultat est satisfaisant avec un rapport i/C (ou r/R) = 92,3% avec $C_d$ = 11,1 MPa et $C_w$ = 10,3 MPa . On constate que les niveaux de résistance sont bons.

## Revendications

1. Bitume solide à température ambiante sous forme de granules comprenant un cœur et une couche de revêtement obtenue par l'application d'une composition comprenant au moins un composé viscosifiant et au moins un composé anti-agglomérant sur tout ou partie de la surface du cœur, dans lequel :

   - le cœur comprend au moins une base bitume et,
   - la couche de revêtement comprend au moins 10% en masse de composés viscosifiants par rapport à la masse totale de la couche de revêtement, et au moins un composé anti-agglomérant.

2. Bitume selon la revendication 1, dans lequel le composé viscosifiant présente une viscosité dynamique supérieure ou égale à 50 $mPa.s^{-1}$, de préférence de 50 $mPa.s^{-1}$ à 550 $mPa.s^{-1}$, plus préférentiellement de 80 $mPa.s^{-1}$ à 450 $mPa.s^{-1}$, la viscosité étant une viscosité Brookfield mesurée à 65°C.

3. Bitume selon la revendication 1 ou 2, dans lequel le composé viscosifiant est choisi parmi :

   - les composés gélifiants, de préférence d'origine végétale ou animale, tels que la gélatine, l'agar-agar, les alginates, les dérivés de cellulose, les amidons, les amidons modifiés et les gommes gellanes ;
   - les polyéthylène glycols (PEG) tels que les PEG ayant un poids moléculaire compris entre 800 $g.mol^{-1}$ et 8000 $g.mol^{-1}$ ;
   - les mélanges de tels composés.

4. Bitume selon l'une quelconque des revendications précédentes, dans lequel la couche de revêtement comprend de 10 à 90% en masse d'au moins un composé viscosifiant par rapport à la masse totale de la couche de revêtement, de préférence de 10 à 85% en masse.

5. Bitume solide selon l'une quelconque des revendications précédentes, dans lequel le composé anti-agglomérant est choisi parmi : le talc ; les fines généralement de diamètre inférieur à 125 μm, telles que les fines silicieuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique; la chaux ; le plâtre ; la poudrette de caoutchouc ; la poudre de polymères, tels que les copolymères styrène-butadiène (SB), les copolymères styrène-butadiène-styrène (SBS) et leurs mélanges.

6. Bitume solide selon l'une quelconque des revendications précédentes, dans lequel la couche de revêtement comprend au moins 10% en masse d'un ou plusieurs composés anti-agglomérants par rapport à la masse totale de la couche de revêtement, de préférence de 10 à 90% en masse, encore plus préférentiellement de 15 à 90 % en masse.

7. Bitume solide selon l'une quelconque des revendications précédentes, dans lequel la base bitume présente une pénétrabilité à l'aiguille mesurée à 25°C selon la norme EN 1426 de 5 à 330 1/10 mm, de préférence de 20 à 220 1/10 mm.

**8.** Bitume solide selon l'une quelconque des revendications précédentes, dans lequel la base bitume comprend en outre au moins un additif chimique choisi parmi : un composé organique, une paraffine, un acide polyphosphorique et leurs mélanges.

**9.** Bitume solide selon l'une quelconque des revendications précédentes, dans lequel la base bitume présente une pénétrabilité de 5 à 45 1/10mm, mesurée à 25°C selon la norme EN 1426 et/ou une température de ramollissement bille et anneau supérieure ou égale à 90°C, la température de ramollissement bille et anneau étant mesurée selon la norme EN 1427.

**10.** Procédé de fabrication d'un bitume solide à température ambiante sous forme de granules composées d'un cœur et d'une couche de revêtement du cœur, ce procédé comprenant :

i) la mise en forme du cœur à partir d'au moins une base bitume,
ii) l'enrobage du cœur sur tout ou partie de sa surface par une composition comprenant au moins 10% en masse d'un ou plusieurs composés viscosifiants par rapport à la masse totale de la couche de revêtement, et au moins un composé anti-agglomérant,
iii) optionnellement, le séchage des granules obtenues à l'étape ii) à une température allant de 20 à 60 °C, pendant une durée allant de 5 minutes à 5 heures, de préférence de 5 minutes à 2 heures.

**11.** Bitume solide à température ambiante selon l'une quelconque des revendications 1 à 9 susceptible d'être obtenu par la mise en œuvre du procédé selon la revendication 10.

**12.** Bitume solide à température ambiante selon l'une quelconque des revendications 1 à 9 et 11, qui présente une stabilité au transport et au stockage à une température allant de 20 à 80°C pendant une durée supérieure ou égale à 2 mois, de préférence supérieure ou égale à 3 mois.

**13.** Utilisation de bitume solide selon l'une quelconque des revendications 1 à 9, 11 ou 12 comme liant routier.

**14.** Procédé de fabrication d'enrobés comprenant au moins un liant routier et des granulats, le liant routier étant choisi parmi les bitumes selon l'une quelconque des revendications 1 à 9, 11 ou 12, ce procédé comprenant au moins les étapes de :

- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

**15.** Procédé selon la revendication 14, qui ne comporte pas d'étape de chauffage du liant routier avant son mélange avec les granulats.

**Patentansprüche**

**1.** Bei Umgebungstemperatur festes Bitumen in der Form von Körnern, umfassend einen Kern und eine Überzugsschicht, die erhalten wird durch Aufbringen einer Zusammensetzung umfassend mindestens eine viskositätserhöhende Verbindung und mindestens eine anti agglomerierende Verbindung auf der gesamten oder einem Teil der Oberfläche des Kerns, wobei:

- der Kern mindestens eine Bitumen-Basis umfasst, und
- die Überzugsschicht mindestens 10 Massen-% viskositätserhöhende Verbindungen im Verhältnis zur Gesamtmasse der Überzugsschicht und mindestens eine anti agglomerierende Verbindung umfasst.

**2.** Bitumen nach Anspruch 1, wobei die viskositätserhöhende Verbindung eine dynamische Viskosität größer oder gleich 50 $mPa.s^{-1}$, vorzugsweise von 50 $mPa.s^{-1}$ bis 550 $mPa.s^{-1}$, bevorzugt von 80 $mPa.s^{-1}$ bis 450 $mPa.s^{-1}$, aufweist, wobei die Viskosität eine bei 65 °C gemessene Brookfield-Viskosität ist.

**3.** Bitumen nach Anspruch 1 oder 2, wobei die viskositätserhöhende Verbindung ausgewählt ist aus:

- gelierenden Verbindungen, vorzugsweise pflanzlichen oder tierischen Ursprungs, wie Gelatine, Agar-Agar,

Alginaten, Cellulose-Derivaten, Stärken, modifizierten Stärken und Gellangummis;
- Polyethylenglykolen (PEG), wie PEG mit einem Molekulargewicht zwischen 800 $g.mol^{-1}$ und 8000 $g.mol^{-1}$;
- Mischungen solcher Verbindungen.

**4.** Bitumen nach einem der vorhergehenden Ansprüche, wobei die Überzugsschicht von 10 bis 90 Massen-% mindestens einer viskositätserhöhenden Verbindung im Verhältnis zur Gesamtmasse der Überzugsschicht, vorzugsweise von 10 bis 85 Massen-%, umfasst.

**5.** Festes Bitumen nach einem der vorhergehenden Ansprüche, wobei die anti agglomerierende Verbindung ausgewählt ist aus: Talk, Feinstoffen allgemein mit einem Durchmesser von weniger als 125 μm, wie silikatischen Feinstoffen, mit Ausnahme von kalkhaltigen Feinstoffen; Sand, wie Fontainebleau-Sand; Zement; Kohlenstoff; Holzrückständen, wie Lignin, Lignosulfonat, Pulvern aus Nadeln von Koniferen, Pulvern aus Zapfen von Koniferen, insbesondere Kiefern; Glaspulver; Tonen, wie Kaolin, Bentonit, Vermiculit; Tonerde, wie Tonerdehydraten; Kieselerde; Derivaten von Kieselerde, wie Silikaten, Siliciumhydroxiden und Siliciumoxiden; Pulver aus Kunststoffmaterial; Kalk; Gips; Kautschukmehl; Polymerpulver, wie Copolymeren von Styrol-Butadien (SB), Copolymeren von Styrol-Butadien-Styrol (SBS) und ihren Mischungen.

**6.** Festes Bitumen nach einem der vorhergehenden Ansprüche, wobei die Überzugsschicht mindestens 10 Massen-% einer oder mehrerer anti agglomerierender Verbindungen im Verhältnis zur Gesamtmasse der Überzugsschicht, vorzugsweise von 10 bis 90 Massen-%, noch weiter bevorzugt von 15 bis 90 Massen-%, umfasst.

**7.** Festes Bitumen nach einem der vorhergehenden Ansprüche, wobei die Bitumen-Basis eine Nadelpenetration, die bei 25 °C gemäß der Norm EN 1426 gemessen wird, von 5 bis 330 1/10 mm, vorzugsweise von 20 bis 220 1/10 mm, aufweist.

**8.** Festes Bitumen nach einem der vorhergehenden Ansprüche, wobei die Bitumen-Basis außerdem mindestens ein chemisches Additiv umfasst, das ausgewählt ist aus: einer organischen Verbindung, einem Paraffin, einer Polyphosphorsäure und ihren Mischungen.

**9.** Festes Bitumen nach einem der vorhergehenden Ansprüche, wobei die Bitumen-Basis eine Penetrierbarkeit von 5 bis 45 1/10 mm, die bei 25 °C gemäß der Norm EN 1426 gemessen wird, und/oder eine Kugel-und-Ring-Erweichungstemperatur größer oder gleich 90 °C aufweist, wobei die Kugel-und-Ring-Erweichungstemperatur gemäß der Norm EN 1427 gemessen wird.

**10.** Verfahren zur Herstellung eines bei Umgebungstemperatur festen Bitumens in der Form von Körnern, bestehend aus einem Kern und einer Überzugsschicht des Kerns, wobei dieses Verfahren umfasst:

i) Formen des Kerns aus mindestens einer Bitumen-Basis,
ii) Überziehen des Kerns auf seiner gesamten oder einem Teil seiner Oberfläche mit einer Zusammensetzung umfassend mindestens 10 Massen-% einer oder mehrerer viskositätserhöhender Verbindungen im Verhältnis zur Gesamtmasse der Überzugsschicht, und mindestens eine anti agglomerierende Verbindung,
iii) gegebenenfalls Trocknen der in dem Schritt ii) erhaltenen Körner bei einer Temperatur von 20 bis 60 °C, während einer Dauer von 5 Minuten bis 5 Stunden, vorzugsweise von 5 Minuten bis 2 Stunden.

**11.** Bei Umgebungstemperatur festes Bitumen nach einem der Ansprüche 1 bis 9, welches durch die Durchführung des Verfahrens nach Anspruch 10 erhalten werden kann.

**12.** Bei Umgebungstemperatur festes Bitumen nach einem der Ansprüche 1 bis 9 und 11, welches eine Transport- und Lagerstabilität bei einer Temperatur von 20 bis 80 °C während einer Dauer größer oder gleich 2 Monaten, vorzugsweise größer oder gleich 3 Monaten, aufweist.

**13.** Verwendung eines festen Bitumens nach einem der Ansprüche 1 bis 9, 11 oder 12 als Straßenbindemittel.

**14.** Verfahren zur Herstellung von Straßendecken, umfassend mindestens ein Straßenbindemittel und Granulate, wobei das Straßenbindemittel ausgewählt wird aus Bitumen nach einem der Ansprüche 1 bis 9, 11 oder 12, wobei dieses Verfahren mindestens die folgenden Schritte umfasst:

- Erhitzen der Granulate auf eine Temperatur von 100 °C bis 180 °C, vorzugsweise von 120 °C bis 160 °C,

- Mischen der Granulate mit dem Straßenbindemittel in einem Gefäß, wie einem Mischer oder einer Mischtrommel,
- Erhalten der Straßendecken.

**15.** Verfahren nach Anspruch 14, welches keinen Schritt des Erhitzens des Straßenbindemittels vor seinem Mischen mit den Granulaten umfasst.

**Claims**

**1.** Bitumen which is solid at ambient temperature, in the form of granules comprising a core and a coating layer obtained by applying a composition comprising at least one viscosifying compound and at least one anti-agglomerating compound to all or part of the surface of the core, in which:

- the core comprises at least one bitumen base, and
- the coating layer comprises at least 10% by weight of viscosifying compounds relative to the total weight of the coating layer, and at least one anti-agglomerating compound.

**2.** Bitumen according to Claim 1, wherein the viscosifying compound has a dynamic viscosity of greater than or equal to 50 $mPa.s^{-1}$, preferably from 50 $mPa.s^{-1}$ to 550 $mPa.s^{-1}$, more preferentially from 80 $mPa.s^{-1}$ to 450 $mPa.s^{-1}$, the viscosity being a Brookfield viscosity measured at 65°C.

**3.** Bitumen according to Claim 1 or 2, wherein the viscosifying compound is chosen from:

- gelling compounds, preferably of plant or animal origin, such as gelatin, agar-agar, alginates, cellulose derivatives, starches, modified starches, and gellan gums;
- polyethylene glycols (PEGs) such as PEGs having a molecular weight of between 800 $g.mol^{-1}$ and 8000 $g.mol^{-1}$;
- mixtures of such compounds.

**4.** Bitumen according to any one of the preceding claims, wherein the coating layer comprises from 10% to 90% by weight of at least one viscosifying compound relative to the total weight of the coating layer, preferably from 10% to 85% by weight.

**5.** Solid bitumen according to any one of the preceding claims, wherein the anti-agglomerating compound is chosen from: talc, fines generally with a diameter of less than 125 μm, such as siliceous fines, with the exception of limestone fines; sand such as fontainebleau sand; cement; carbon; wood residues such as lignin, lignosulfonate, conifer needle powders, conifer cone powders, notably of pine; glass powder; clays such as kaolin, bentonite, vermiculite; alumina such as alumina hydrates; silica; silica derivatives such as silicates, silicon hydroxides and silicon oxides; plastic powder; lime; gypsum; powdered rubber; powder of polymers, such as styrene-butadiene (SB) copolymers, styrene-butadiene-styrene (SBS) copolymers and mixtures thereof.

**6.** Solid bitumen according to any one of the preceding claims, wherein the coating layer comprises at least 10% by weight of one or more anti-agglomerating compounds relative to the total weight of the coating layer, preferably from 10% to 90% by weight, even more preferentially from 15% to 90% by weight.

**7.** Solid bitumen according to any one of the preceding claims, wherein the bitumen base has a needle-penetrability measured at 25°C according to standard EN 1426 of from 5 to 330 1/10 mm, preferably from 20 to 220 1/10 mm.

**8.** Solid bitumen according to any one of the preceding claims, wherein the bitumen base also comprises at least one chemical additive chosen from: an organic compound, a paraffin, a polyphosphoric acid and mixtures thereof.

**9.** Solid bitumen according to any one of the preceding claims, wherein the bitumen base has a penetrability of from 5 to 45 1/10 mm, measured at 25°C according to standard EN 1426, and/or a ring and ball softening temperature of greater than or equal to 90°C, the ring and ball softening temperature being measured according to standard EN 1427.

**10.** Process for manufacturing a bitumen which is solid at ambient temperature, in the form of granules composed of a core and of a coating layer for the core, this process comprising:

i) forming the core from at least one bitumen base,
ii) coating the core on all or part of its surface with a composition comprising at least 10% by weight of one or more viscosifying compounds relative to the total weight of the coating layer and at least one anti-agglomerating compound,
iii) optionally, drying the granules obtained in step ii) at a temperature ranging from 20 to 60°C, for a period ranging from 5 minutes to 5 hours, preferably from 5 minutes to 2 hours.

**11.** Bitumen which is solid at ambient temperature according to any one of Claims 1 to 9, capable of being obtained by carrying out the process according to Claim 10.

**12.** Bitumen which is solid at ambient temperature according to any one of Claims 1 to 9 and 11, which has a stability with respect to transportation and storage at a temperature ranging from 20 to 80°C for a period of greater than or equal to 2 months, preferably greater than or equal to 3 months.

**13.** Use of solid bitumen according to any one of Claims 1 to 9, 11 or 12, as a road binder.

**14.** Process for manufacturing mixes comprising at least one road binder and aggregates, the road binder being chosen from the bitumens according to any one of Claims 1 to 9, 11 or 12, this process comprising at least the steps of:

- heating the aggregates to a temperature ranging from 100°C to 180°C, preferably from 120°C to 160°C,
- mixing the aggregates with the road binder in a tank such as a mixer or a mixing drum,
- obtaining mixes.

**15.** Process according to Claim 14, which does not comprise a step of heating the road binder before it is mixed with the aggregates.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 3026568 A
- WO 2009153324 A
- US 20110233105 A
- EP 1432778 A
- EP 1328607 A
- EP 0199475 A
- WO 9714753 A
- WO 2007058994 A
- WO 2008137394 A
- WO 11013073 A
- WO 2012168380 A